# EUROPÄISCHE PATENTSCHRIFT

(11) **EP 2 821 300 B1**
(45) Veröffentlichungstag und Bekanntmachung des Hinweises auf die Patenterteilung: **03.06.2020**
(21) Anmeldenummer: 14174050.6
(22) Anmeldetag: 26.06.2014
(51) Int. Cl.: B60S 1/38

(54) **Wischblattvorrichtung**
Wiper blade device
Dispositif de raclette d'essuie-glace

(30) Priorität: 01.07.2013 DE 102013212784
(43) Veröffentlichungstag der Anmeldung: 07.01.2015
(73) Patentinhaber: Robert Bosch GmbH, 70442 Stuttgart (DE)
(72) Erfinder: Bonroy, Jan, 3001 Heverlee (BE); Truyens, Stijn, 3300 Tienen (BE); Verelst, Hubert, 3300 Tienen (BE); Beelen, Hans, B-3540 Herk de Stad (BE); Urbanek, Lothar, 3500 Hasselt (BE)

(56) Entgegenhaltungen:
- DE-A1- 10 038 397
- DE-A1-102004 051 466
- DE-A1-102005 052 258
- DE-A1-102012 211 055
- US-A- 2 782 443
- US-A1- 2007 240 271
- US-A1- 2013 133 152

## Beschreibung

### Stand der Technik

Es ist bereits eine Wischblattvorrichtung mit zumindest zwei Federschienen und mit zumindest einer Brückeneinheit, die zumindest dazu vorgesehen ist, die zumindest zwei Federschienen in wenigstens einem Bereich entlang einer Haupterstreckungsrichtung in einem definierten Abstand relativ zueinander zu halten, vorgeschlagen worden.
Aus der DE 10 2005 052 258 A1 ist eine Wischblattvorrichtung mit zwei Federschienen bekannt, die eine Brückeneinheit aufweist, die dazu vorgesehen ist, die zumindest zwei Federschienen in wenigstens einem Bereich entlang der Haupterstreckungsrichtung in einem definierten relativen Abstand zu halten.

Weiterer Stand der Technik ist aus der DE 10 2004 051 466 A1 und aus der US 2,782,443 A bekannt.

### Offenbarung der Erfindung

Die Erfindung geht aus von einer Wischblattvorrichtung mit zumindest zwei Federschienen und mit zumindest einer Brückeneinheit, die zumindest dazu vorgesehen ist, die zumindest zwei Federschienen in wenigstens einem Bereich entlang einer Haupterstreckungsrichtung in einem definierten Abstand relativ zueinander zu halten.

Es wird vorgeschlagen, dass die zumindest eine Brückeneinheit zumindest zwei Formschlusselemente aufweist, die zu einer Herstellung einer direkten, in zumindest eine Richtung wirkenden Formschlussverbindung mit den zumindest zwei Federschienen vorgesehen sind. Vorzugsweise ist die zumindest eine Brückeneinheit zudem dazu vorgesehen, die zumindest zwei Federschienen in wenigstens einem Bereich entlang einer Haupterstreckungsrichtung gegen eine Rotation gegeneinander sowie gegen ein Verschieben gegeneinander zu sichern. Bevorzugt erstreckt sich die Haupterstreckungsrichtung parallel zu einer Längserstreckung der zumindest zwei Federschienen. Besonders bevorzugt wirkt die Formschlussverbindung des zumindest einen ersten Formschlusselements in zumindest einer Ebene. Unter einer "Federschiene" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Vorzugsweise ist die Federschiene zumindest teilweise aus einem Federstahl ausgebildet. Vorzugsweise weist die Federschiene in einem unbelasteten Zustand im Wesentlichen eine Form eines gebogenen Stabs und besonders vorteilhaft eines abgeflachten gebogenen Stabs auf. Besonders vorteilhaft ist eine Krümmung der Federschiene entlang einer Längserstreckung in einem unbelasteten Zustand größer als eine Krümmung einer Fahrzeugoberfläche eines Kraftfahrzeugs, insbesondere einer Fahrzeugscheibe, über welche die Federschiene in wenigstens einem Betriebszustand geführt wird. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Ferner soll in diesem Zusammenhang unter einer "Brückeneinheit" insbesondere eine Einheit verstanden werden, die dazu vorgesehen ist, zumindest zwei Federschienen miteinander zumindest teilweise zu verbinden. Vorzugsweise soll darunter eine Einheit verstanden werden, die dazu vorgesehen ist, zumindest zwei Federschienen zumindest teilweise relativ zueinander zu halten und zu verbinden. Besonders bevorzugt soll darunter insbesondere eine Einheit verstanden werden, die zumindest dazu vorgesehen ist, zumindest zwei Federschienen zumindest teilweise in einem definierten Abstand relativ zueinander zu halten. Ferner soll in diesem Zusammenhang unter "vorgesehen" insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Haupterstreckungsrichtung" einer Baueinheit soll insbesondere eine Richtung verstanden werden, welche parallel zu einer längsten Seitenkante eines kleinsten geometrischen Quaders ist, welcher die Baueinheit gerade noch vollständig umschließt. Unter einem "Formschlusselement" soll in diesem Zusammenhang insbesondere ein Element verstanden werden, dass zu einer Herstellung einer zumindest teilweise formschlüssigen Verbindung mit zumindest einem Objekt und/oder einem weiteren Formschlusselement vorgesehen ist. Vorzugsweise soll darunter insbesondere ein Element verstanden werden, dass zu einer Herstellung einer in zumindest eine Richtung, vorzugsweise in zumindest einer Ebene, wirkenden formschlüssigen Verbindung mit zumindest einem Objekt und/oder einem weiteren Formschlusselement vorgesehen ist. Dabei soll in diesem Zusammenhang unter "formschlüssig" insbesondere verstanden werden, dass aneinanderliegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Ferner soll in diesem Zusammenhang unter einer "direkten Formschlussverbindung" insbesondere eine Formschlussverbindung verstanden werden, bei der die zu verbindenden Bauteile zu einer direkten Kontaktierung vorgesehen sind. Vorzugsweise soll darunter insbesondere verstanden werden, dass eine Haltekraft der Formschlussverbindung direkt, also insbesondere zwischenstationsfrei, zwischen den zu verbindenden Bauteilen übertragen wird.

Durch die erfindungsgemäße Ausgestaltung der Wischblattvorrichtung kann vorteilhaft eine besonders leicht herzustellende Fixierung der zumindest zwei Federschienen erreicht werden. Insbesondere kann dadurch eine besonders zuverlässige und genaue Fixierung bereitgestellt werden. Ferner kann eine besonders schnelle Montage der Wischblattvorrichtung erreicht werden.

Ferner wird vorgeschlagen, dass die zumindest zwei Federschienen jeweils zumindest eine Ausnehmung aufweisen, in die jeweils zumindest eines der zumindest zwei Formschlusselemente der zumindest einen Brückeneinheit eingreift. Vorzugsweise ist die Ausnehmung von einer Durchgangsöffnung gebildet. Unter einer "Ausnehmung" soll in diesem Zusammenhang insbesondere eine materielle Aussparung verstanden werden. Vorzugsweise ist ein geometrischer Mittelpunkt der Ausnehmung in zumindest einer Ebene in einem Winkelbereich von zumindest 180°, vorzugweise von zumindest 270° und besonders bevorzugt von 360° von einer begrenzenden Wandung der entsprechenden Federschiene umgeben. Unter einer "Durchgangsöffnung" soll in diesem Zusammenhang insbesondere eine Öffnung verstanden werden, die zumindest einen Eingang und einen von dem Eingang getrennten Ausgang aufweist. Vorzugsweise ist der Ausgang an einem dem Eingang abgewandten Ende der Durchgangsöffnung angeordnet. Dadurch kann vorteilhaft eine besonders leicht herzustellende Fixierung der zumindest zwei Federschienen erreicht werden. Insbesondere kann dadurch eine besonders zuverlässige und positionsgenaue Fixierung der Federschienen erreicht werden.

Des Weiteren wird vorgeschlagen, dass die zumindest zwei Formschlusselemente jeweils zumindest ein Rastmittel aufweisen. Unter einem "Rastmittel" soll in diesem Zusammenhang insbesondere ein federelastisches Mittel zur Herstellung einer Rastverbindung verstanden werden, das dazu vorgesehen ist, bei einer Montage elastisch ausgelenkt zu werden. Vorzugsweise soll darunter ein Mittel verstanden werden, das bei einem Befestigungsvorgang elastisch ausgelenkt wird, um anschließend durch eine innere Spannkraft hinter einem korrespondierenden Rastmittel und/oder einem anderen Objekt und/oder Element einzurasten. Dadurch kann eine besonders einfache Fixierung der Brückeneinheit bereitgestellt werden. Insbesondere kann dadurch eine besonders einfache und komfortable Montage ermöglicht werden.

Es wird ferner vorgeschlagen, dass der zumindest eine Bereich entlang der Haupterstreckungsrichtung der zumindest zwei Federschienen in einem Endbereich der zumindest zwei Federschienen angeordnet ist. Unter einem "Endbereich" der Federschiene und/oder der Wischleiste soll insbesondere ein Bereich der Federschiene und/oder der Wischleiste verstanden werden, der bei einer Projektion der Federschiene und/oder der Wischleiste auf eine Ebene und bei einer Betrachtung in eine Längsrichtung der Federschiene und/oder der Wischleiste zumindest an einem von zwei an entgegengesetzten Enden der Federschiene und/oder der Wischleiste angeordneten Enden angeordnet ist. Dadurch kann insbesondere eine vorteilhafte Fixierung erreicht werden.

Es wird weiter vorgeschlagen, dass die Wischblattvorrichtung erfindungsgemäß zumindest eine Endkappe aufweist, die in zumindest einem Endbereich der zumindest zwei Federschienen angeordnet ist. Unter einer "Endkappe" soll in diesem Zusammenhang insbesondere ein Bauteil verstanden werden, das dazu vorgesehen ist, an einem Ende einer Federschiene befestigt zu werden. Die Endkappe ist insbesondere dazu vorgesehen, in einem montierten Zustand einen Endabschluss eines Wischblatts bereitzustellen. Vorzugsweise ist die Endkappe zumindest teilweise aus einem Kunststoff gebildet. Vorzugsweise umgreift die Endkappe in wenigstens einem montierten Zustand einen Teil der Federschiene. Vorzugsweise umfasst die Wischvorrichtung genau zwei Endkappen, jeweils eine für jedes Ende der Federschiene. Dadurch kann vorteilhaft eine Abdeckung des zumindest einen Endbereichs erreicht werden.

Ferner wird vorgeschlagen, dass die zumindest eine Endkappe erfindungsgemäß die zumindest eine Brückeneinheit auf den zumindest zwei Federschienen sichert. Vorzugsweise ist die Brückeneinheit dabei zumindest teilweise mit der Endkappe formschlüssig und/oder kraftschlüssig verbunden, insbesondere verrastet. Dadurch kann insbesondere die formschlüssige Verbindung zwischen der zumindest einen Brückeneinheit und den zumindest zwei Federschienen gesichert werden. Insbesondere kann so eine zweite Sicherung realisiert werden. Ferner kann dadurch eine Sicherung über ein auch anderweitig genutztes Bauteil realisiert werden. Dadurch können wiederum Bauteile eingespart werden.

Es wird weiter vorgeschlagen, dass die zumindest zwei Formschlusselemente zur Herstellung einer Formschlussverbindung verstemmt sind. Vorzugsweise sind die zumindest zwei Formschlusselemente zur Herstellung einer Formschlussverbindung heißverstemmt. Darunter, dass die zumindest zwei Formschlusselemente "verstemmf' sind, soll in diesem Zusammenhang insbesondere verstanden werden, dass die zumindest zwei Formschlusselemente in einem Fertigungsverfahren zur Herstellung einer zumindest formschlüssigen Verbindung zumindest durch Einwirkung von Kraft, vorzugsweise von Kraft und Wärme, umgeformt und besonders bevorzugt zumindest teilweise angeschmolzen werden. Dadurch kann insbesondere eine zerstörungsfrei unlösbare Fixierung der zumindest zwei Federschienen bereitgestellt werden. Insbesondere können die Formschlusselemente hinter den Ausnehmungen der Federschienen verstemmt werden, sodass sie nicht zurück durch die Ausnehmungen passen.

Die erfindungsgemäße Wischblattvorrichtung soll hierbei nicht auf die oben beschriebene Anwendung und Ausführungsform beschränkt sein.

### Zeichnung

Weitere Vorteile ergeben sich aus der folgenden Zeichnungsbeschreibung. In der Zeichnung sind fünf Ausführungsbeispiele der Erfindung dargestellt.

Es zeigen:
- Fig. 1: eine erfindungsgemäße Wischblattvorrichtung mit einer Windabweisereinheit, mit einem Wischblattadapter, mit einer Wischleiste und mit zwei Endkappen in einer schematischen Darstellung,
- Fig. 2: einen Teilausschnitt II der erfindungsgemäßen Wischblattvorrichtung mit der Wischleiste, mit zwei Federschienen, mit einer Brückeneinheit und mit einer der zwei Endkappen in einer schematischen Schnittdarstellung,
- Fig. 3: die Brückeneinheit der erfindungsgemäßen Wischblattvorrichtung in einer schematischen Darstellung,
- Fig. 4: den Teilausschnitt II der erfindungsgemäßen Wischblattvorrichtung mit der Wischleiste, mit den zwei Federschienen, mit der Brückeneinheit und mit der Endkappe in einer schematischen Explosionsdarstellung,
- Fig. 5: den Teilausschnitt II der erfindungsgemäßen Wischblattvorrichtung mit der Wischleiste, mit den zwei Federschienen, mit der Brückeneinheit und mit der Endkappe in einer schematischen Schnittdarstellung,
- Fig. 6: die Endkappe der erfindungsgemäßen Wischblattvorrichtung in einer schematischen Darstellung,
- Fig. 7: die Endkappe der erfindungsgemäßen Wischblattvorrichtung in einer weiteren schematischen Darstellung,
- Fig. 8: einen Teilausschnitt der erfindungsgemäßen Wischblattvorrichtung mit den zwei Federschienen und mit der Brückeneinheit in einer schematischen Darstellung,
- Fig. 9: den Teilausschnitt der erfindungsgemäßen Wischblattvorrichtung mit den zwei Federschienen und mit der Brückeneinheit in einer weiteren schematischen Darstellung,
- Fig. 10: einen Teilausschnitt einer alternativen erfindungsgemäßen Wischblattvorrichtung mit zwei Federschienen, mit einer Brückeneinheit und mit einer Wischleiste in einer schematischen Schnittdarstellung,
- Fig. 11: einen Teilausschnitt einer weiteren alternativen Wischblattvorrichtung mit einer Wischleiste, mit zwei Federschienen, mit einer Brückeneinheit und mit einer Endkappe in einer schematischen Darstellung,
- Fig. 12: die Endkappe und die Brückeneinheit der weiteren alternativen Wischblattvorrichtung in einer schematischen Darstellung,
- Fig. 13: einen Teilausschnitt der zwei Federschienen der weiteren alternativen Wischblattvorrichtung in einer schematischen Darstellung,
- Fig. 14: einen Teilausschnitt der Endkappe, der Brückeneinheit und einer der Federschienen in einer schematischen Schnittdarstellung,
- Fig. 15: einen Teilausschnitt einer weiteren alternativen Wischblattvorrichtung mit zwei Federschienen, mit einer Brückeneinheit und mit einer Endkappe in einer schematischen Schnittdarstellung,
- Fig. 16: einen Teilausschnitt der weiteren alternativen Wischblattvorrichtung mit den zwei Federschienen, mit der Brückeneinheit, mit der Endkappe und mit einer Wischleiste in einer schematischen Darstellung,
- Fig. 17: einen Teilausschnitt einer weiteren alternativen Wischblattvorrichtung mit einer Wischleiste, mit zwei Federschienen, mit einer Brückeneinheit und mit einer Endkappe in einer schematischen Schnittdarstellung und
- Fig. 18: einen Teilausschnitt der weiteren alternativen Wischblattvorrichtung mit der Wischleiste, mit den zwei Federschienen, mit der Brückeneinheit und mit der Endkappe in einem Montagezustand in einer schematischen Schnittdarstellung.

### Beschreibung der Ausführungsbeispiele

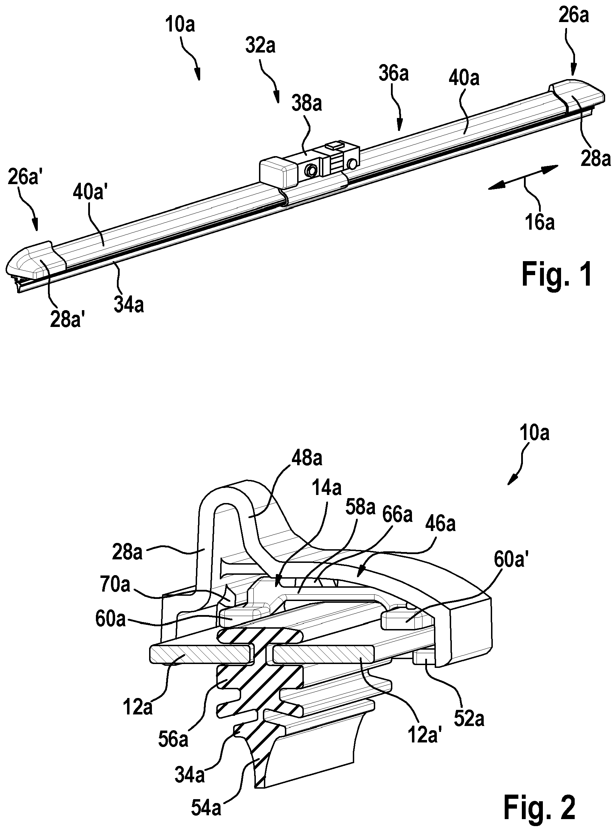

Figur 1 zeigt eine erfindungsgemäße Wischblattvorrichtung 10a. Die Wischblattvorrichtung 10a bildet einen Teil eines Wischblatts 32a. Die Wischblattvorrichtung 10a ist vollständig von einem Wischblatt 32a gebildet. Die Wischblattvorrichtung 10a weist zwei Federschienen 12a, 12a' auf. Ferner weist die Wischblattvorrichtung 10a eine Wischleiste 34a, zwei Endkappen 28a, 28a', eine Windabweisereinheit 36a und einen Wischblattadapter 38a auf. Der Wischblattadapter 38a ist dazu vorgesehen, die Wischblattvorrichtung 10a mit einem nicht weiter sichtbaren Wischarm zu verbinden. Der Wischblattadapter 38a ist dazu vorgesehen, direkt mit einem nicht weiter sichtbaren Wischarmadapter des nicht weiter sichtbaren Wischarms verbunden zu werden. Der Wischblattadapter 38a ist teilweise auf der Windabweisereinheit 36a angeordnet. Die Windabweisereinheit 36a ist dazu vorgesehen in einem an einem nicht weiter sichtbaren Kraftfahrzeug montierten Zustand einen auf die Wischblattvorrichtung 10a einwirkenden Fahrtwind abzuweisen. Ferner ist die Windabweisereinheit 36a dazu vorgesehen, einen Fahrtwind umzuleiten und eine daraus resultierende Kraft zu einer Erhöhung eines Anpressdrucks der Wischblattvorrichtung 10a auf einer nicht weiter sichtbaren Scheibe des nicht weiter sichtbaren Kraftfahrzeugs zu erhöhen. Die Windabweisereinheit 36a der Wischblattvorrichtung 10a ist zweiteilig ausgebildet. Die Windabweisereinheit 36a besteht aus zwei Windabweiserelementen 40a, 40a'. Die zwei Windabweiserelemente 40a, 40a' sind auf gegenüberliegenden Seiten des Wischblattadapters 38a angeordnet. Die Wischleiste 34a ist über die zwei Federschienen 12a, 12a' in der Windabweisereinheit 36a gehalten. Die zwei Federschienen 12a, 12a' sind dazu jeweils in einer Nut der Wischleiste 34a geführt und werden von außen von der Windabweisereinheit 36a umgriffen. Die zwei Federschienen 12a, 12a' sind ferner, entlang ihrer Haupterstreckungsrichtung betrachtet, jeweils in ihrer Mitte nicht weiter sichtbar fest mit dem Wischblattadapter 38a verbunden. Die Haupterstreckungsrichtung der Federschienen 12a, 12a' entspricht einer Haupterstreckungsrichtung 16a der Wischblattvorrichtung 10a.

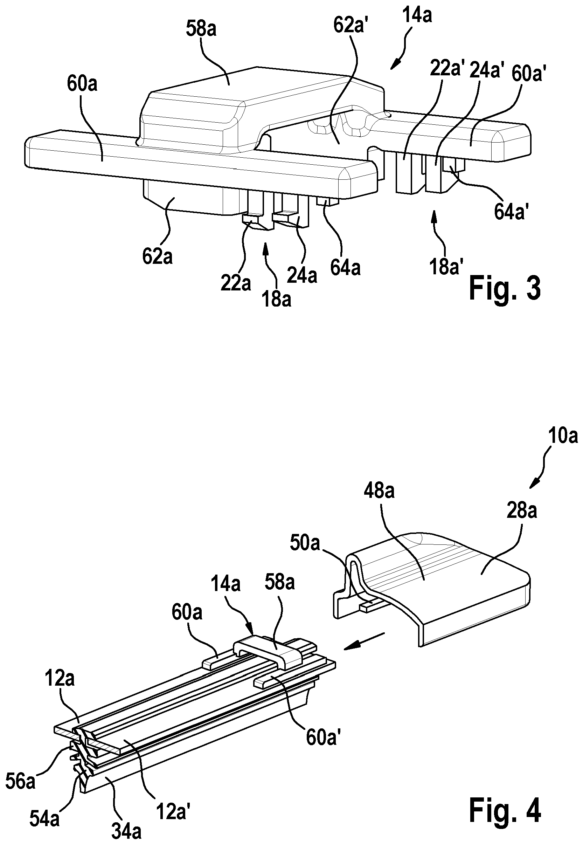

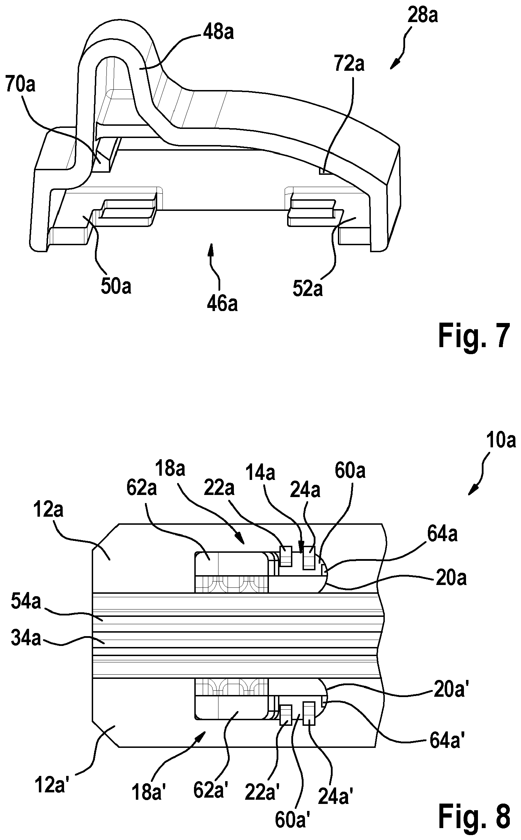

Die Federschienen 12a, 12a' sind jeweils von einem federelastischen, abgeflachten Stab gebildet. Die Federschienen 12a, 12a' sind jeweils teilweise gekrümmt. Die Federschienen 12a, 12a' bestehen aus einem Federstahl. Die Federschienen 12a, 12a' weisen jeweils zwei Ausnehmungen 20a, 20a' auf. Die Ausnehmungen 20a, 20a' sind jeweils von Durchgangsöffnungen gebildet. Die Ausnehmungen 20a, 20a' sind, entlang der Haupterstreckungsrichtung 16a betrachtet, jeweils in einem Endbereich 26a, 26a' der Federschienen 12a, 12a' angeordnet. Die zwei Ausnehmungen 20a, 20a' einer Federschiene 12a, 12a' sind dabei jeweils in gegenüberliegenden Endbereichen 26a, 26a' angeordnet (Figur 4, 8).

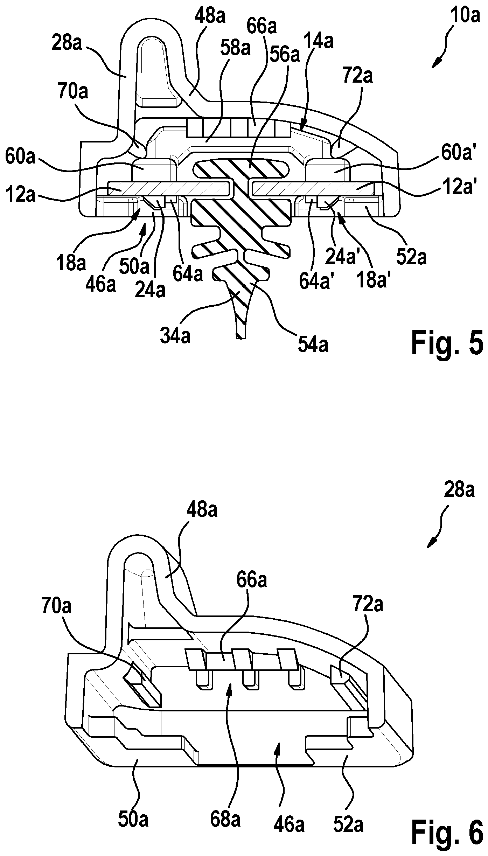

Die zwei Endkappen 28a, 28a' sind, senkrecht zu der Haupterstreckungsrichtung 16a der Wischblattvorrichtung 10a betrachtet, jeweils an den äußeren Enden der Wischblattvorrichtung 10a angeordnet. Die zwei Endkappen 28a, 28a' decken jeweils die Enden der zwei Federschienen 12a, 12a', der Windabweisereinheit 36a und der Wischleiste 34a ab. Die Wischleiste 34a wird von den Endkappen 28a, 28a' jeweils lediglich teilweise abgedeckt. Die Endkappen 28a, 28a' sind, parallel zu der Haupterstreckungsrichtung 16a der Wischblattvorrichtung 10a betrachtet, jeweils in einem Endbereich 26a, 26a' der Federschienen 12a, 12a' angeordnet. Die Endkappen 28a, 28a' sind jeweils in gegenüberliegenden Endbereichen 26a, 26a' der Federschienen 12a, 12a' angeordnet. Die Endkappen 28a, 28a' sind jeweils spiegelsymmetrisch zueinander ausgebildet. Die Endkappen 28a, 28a' sind jeweils von teilrunden Abdeckungen gebildet, die in jeweils zwei senkrecht zueinander stehenden Öffnungsebenen 42a, 44a geöffnet sind. Die beiden Öffnungen der Öffnungsebenen 42a, 44a einer Endkappe 28a, 28a' sind jeweils miteinander verbunden und bilden eine gemeinsame Öffnung 46a. Die erste Öffnungsebene 42a der Endkappen 28a, 28a' verläuft jeweils senkrecht zu der Haupterstreckungsrichtung 16a der Wischblattvorrichtung 10a. Die zweite Öffnungsebene 44a der Endkappen 28a, 28a' verläuft jeweils parallel zu einer Haupterstreckungsebene der zwei Federschienen 12a, 12a'. Ein geschlossener Bereich der Endkappen 28a, 28a' weist teilweise eine Außenkontur auf, die einer Außenkontur der Windabweisereinheit 36a entspricht. Der geschlossene Bereich der Endkappen 28a, 28a' bildet jeweils einen Grundkörper 48a, 48a' der Endkappen 28a, 28a'. Die Endkappen 28a, 28a' weisen jeweils zwei Haltestege 50a, 52a auf. Die zwei Haltestege 50a, 52a einer Endkappe 28a, 28a' ragen jeweils senkrecht zu der Haupterstreckungsrichtung 16a der Wischblattvorrichtung 10a parallel zu der zweiten Öffnungsebene 44a aus zwei entgegengesetzten Richtungen in die Öffnung 46a der jeweiligen Endkappe 28a, 28a' hinein. Die Haltestege 50a, 52a sind teilweise in einer Ebene parallel zu der zweiten Öffnungsebene 44a L-förmig ausgebildet. Die Haltestege 50a, 52a der Endkappen 28a, 28a' sind dazu vorgesehen, die Endkappen 28a, 28a' in einer Ebene senkrecht zu der Haupterstreckungsrichtung 16a der Wischblattvorrichtung 10a relativ zu den Federschienen 12a, 12a' zu halten. Die Haltestege 50a, 52a sind jeweils auf einer dem Grundkörper 48a, 48a der Endkappen 28a, 28a' abgewandten Seite der Federschienen 12a, 12a' angeordnet. Die Haltestege 50a, 52a der Endkappen 28a, 28a' umgreifen die Federschienen 12a, 12a' dadurch teilweise (Figur 6, 7).

Die Wischleiste 34a der Wischblattvorrichtung 10a ist von einem länglichen Körper gebildet, der über seine Länge einen annähernd gleichbleibenden Querschnitt aufweist. Die Wischleiste 34a ist in einem Extrusionsverfahren hergestellt. Grundsätzlich wäre jedoch auch ein anderes, einem Fachmann als sinnvoll erscheinendes Herstellungsverfahren denkbar. Die Wischleiste 34a besteht im Wesentlichen aus Kautschuk. Grundsätzlich sind jedoch auch andere, einem Fachmann als sinnvoll erscheinende Materialien denkbar. Die Wischleiste 34a weist eine Wischlippe 54a und eine Kopfleiste 56a auf. Die Wischlippe 54a ist über einen schmalen Steg mit der Kopfleiste 56a verbunden. Die Wischlippe 54a ist durch den Steg gegenüber der Kopfleiste 56a verkippbar. Die Wischlippe 54a, die Kopfleiste 56a und der Steg erstrecken sich, entlang der Haupterstreckungsrichtung 16a der Wischleistenvorrichtung 10a betrachtet, über eine gesamte Erstreckung der Wischleiste 34a. Die Nuten für die Federschienen 12a, 12a' sind in der Kopfleiste 56a angeordnet. Die Wischlippe 54a weist eine annähernd dreieckige Querschnittsform auf (Figur 1, 2, 4).

Ferner weist die Wischblattvorrichtung 10a zwei Brückeneinheiten 14a auf. Die Brückeneinheiten 14a sind jeweils dazu vorgesehen, die zwei Federschienen 12a, 12a' in jeweils einem Bereich entlang einer Haupterstreckungsrichtung 16a in einem definierten Abstand relativ zueinander zu halten. Ferner sind die Brückeneinheiten 14a jeweils dazu vorgesehen, die zwei Federschienen 12a, 12a' in jeweils einem Bereich entlang der Haupterstreckungsrichtung 16a gegen eine Rotation gegeneinander zu sichern. Des Weiteren sind die Brückeneinheiten 14a jeweils dazu vorgesehen, die zwei Federschienen 12a, 12a' in jeweils einem Bereich entlang der Haupterstreckungsrichtung 16a gegen eine Verschiebung parallel zu der Haupterstreckungsrichtung 16a relativ zueinander zu sichern. Die Haupterstreckungsrichtung 16a der Federschienen 12a, 12a' verläuft parallel zu einer Längserstreckung der Federschienen 12a, 12a'. Die Bereiche, in denen die Federschienen 12a, 12a' durch die Brückeneinheiten 14a gehalten und gesichert sind, sind jeweils entlang der Haupterstreckungsrichtung 16a der zwei Federschienen 12a, 12a' in einem Endbereich 26a, 26a' der zwei Federschienen 12a, 12a' angeordnet. Die Brückeneinheiten 14a sind identisch ausgebildet. Daher ist in den Figuren jeweils lediglich eine Brückeneinheit 14a dargestellt. Alle Merkmale dieser Brückeneinheit 14a können aber auch auf die andere, nicht weiter sichtbare Brückeneinheit übertragen werden. Im Folgenden ist deshalb lediglich die dargestellte Brückeneinheit 14a im Detail beschrieben. Die Brückeneinheit 14a weist einen teilweise brückenförmigen Grundkörper 58a auf, der sich senkrecht zu der Haupterstreckungsrichtung 16a von einer der Federschienen 12a, 12a' zu der anderen Federschiene 12a, 12a' erstreckt. An den zwei Enden des brückenförmigen Grundkörpers 58a ist jeweils ein Steg 60a, 60a' angeordnet. Die zwei Stege 60a, 60a' erstrecken sich jeweils parallel zu der Haupterstreckungsrichtung 16a der Wischblattvorrichtung 10a. Ferner weist die Brückeneinheit 14a zwei Formschlusselemente 18a, 18a' auf. Die Formschlusselemente 18a, 18a' sind zu einer Herstellung einer direkten, in mehrere Richtungen wirkenden Formschlussverbindung mit den zwei Federschienen 12a, 12a' vorgesehen. Die Formschlusselemente 18a, 18a' sind zu einer Herstellung einer in einer Ebene wirkenden Formschlussverbindung vorgesehen. Die Formschlusselemente 18a, 18a' sind jeweils an einem der Stege 60a, 60a' der Brückeneinheit 14a angeordnet. Jedem Steg 60a, 60a' ist eines der Formschlusselemente 18a, 18a' zugeordnet. Die Formschlusselemente 18a, 18a' greifen jeweils in die Ausnehmungen 20a, 20a' der Federschienen 12a, 12a' ein. In jede der Ausnehmungen 20a, 20a' greift jeweils ein Formschlusselement 18a, 18a' der Formschlusselemente 18a, 18a' ein. Die Formschlusselemente 18a, 18a' der Brückeneinheit 14a greifen in eine Ausnehmung 20a der einen Federschiene 12a und in eine Ausnehmung 20a' der anderen Federschiene 12a' ein. Die Formschlusselemente 18a, 18a' der Brückeneinheit 14a greifen in Ausnehmungen 20a, 20a' ein, die in einem Endbereich 26a angeordnet sind (Figur 2, 3, 4).

Die zwei Formschlusselemente 18a, 18a' der Brückeneinheit 14a weisen jeweils zwei Rastmittel 22a, 22a', 24a, 24a' auf. Die Rastmittel 22a, 22a', 24a, 24a' der Formschlusselemente 18a, 18a' der Brückeneinheit 14a sind jeweils von einer Rastnase gebildet. Die zwei Rastmittel 22a, 22a', 24a, 24a' eines Formschlusselements 18a, 18a' weisen jeweils differierende Rasthöhen auf. Ein Rastmittel 22a, 22a' weist eine Rasthöhe von 1 mm auf und das zweite Rastmittel 24a, 24a' weist eine Rasthöhe von 0,8 mm auf. Grundsätzlich sind jedoch auch andere, einem Fachmann als sinnvoll erscheinende Rasthöhen denkbar. Die Brückeneinheit 14a kann dadurch mit verschiedenen Federschienen 12a, 12a' verrastet werden. Die Rastmittel 22a, 22a', 24a, 24a' der Formschlusselemente 18a, 18a' ragen senkrecht zu der Haupterstreckungsrichtung 16a der Wischblattvorrichtung 10a auf einer dem Grundkörper 58a der Brückeneinheit 14a abgewandten Seite aus den Stegen 60a, 60a' der Brückeneinheit 14a. Die Nasen der Rastmittel 22a, 22a', 24a, 24a' sind dabei, bezogen auf einen geometrischen Mittelpunkt der Brückeneinheit 14a, nach außen gerichtet. Die Rastmittel 22a, 22a', 24a, 24a' sind dazu vorgesehen, die Brückeneinheit 14a während einer Montage relativ zu den Federschienen 12a, 12a' zu halten. Die Rastmittel 22a, 22a', 24a, 24a' verrasten in einem montierten Zustand in den Ausnehmungen 20a, 20a' der Federschienen 12a, 12a'.Die Rastmittel 22a, 22a', 24a, 24a' verrasten in einem montierten Zustand mit Wandungen der Federschienen 12a, 12a', welche die Ausnehmungen 20a, 20a' begrenzen. Dadurch kann eine komfortable Montage ermöglicht werden. Ferner weisen die Formschlusselemente 18a, 18a' jeweils zwei Positionierungsmittel 62a, 62a', 64a, 64a' auf. Die Formschlusselemente 18a, 18a' weisen jeweils ein erstes Positionierungsmittel 62a, 62a' und ein zweites Positionierungsmittel 64a, 64a' auf. Die ersten Positionierungsmittel 62a, 62a' der Formschlusselemente 18a, 18a' sind jeweils von einem annähernd rechteckigen Fortsatz gebildet. Die zweiten Positionierungsmittel 64a, 64a' der Formschlusselemente 18a, 18a' sind jeweils von einer Rippe gebildet. Die zweiten Positionierungsmittel 64a, 64a' sind unter anderem dazu vorgesehen, die Federschienen 12a, 12a' während einer Montage in Position zu halten. Die Positionierungsmittel 62a, 62a', 64a, 64a' der Formschlusselemente 18a, 18a' sind dazu vorgesehen, die Brückeneinheit 14a relativ zu den Federschienen 12a, 12a'und die Federschienen 12a, 12a' relativ zueinander zu positionieren. Die Positionierungsmittel 62a, 62a', 64a, 64a' ragen in einem montierten Zustand jeweils in eine der Ausnehmungen 20a, 20a' der Federschienen 12a, 12a'. Die Positionierungsmittel 62a, 62a', 64a, 64a' jeweils eines Formschlusselements 18a, 18a' liegen dabei an drei Seiten der jeweiligen Ausnehmung 20a, 20a' der jeweiligen Federschienen 12a, 12a' an. Dadurch kann eine exakte Positionierung erfolgen. Ferner kann dadurch unter anderem eine horizontale Bewegung der Federschienen 12a, 12a' entlang der Haupterstreckungsrichtung 16a der Wischblattvorrichtung 10a verhindert werden. Die horizontale Bewegung der Federschienen 12a, 12a' relativ zueinander wird unter anderem durch das zweite Positionierungsmittel 64a, 64a' und den Grundkörper 58a der Brückeneinheit 14a verhindert (Figur 3, 8, 9).

Die Endkappen 28a, 28a' der Wischblattvorrichtung 10a sichern die Brückeneinheiten 14a auf den zwei Federschienen 12a, 12a'. Jede Endkappe 28a, 28a' sichert jeweils eine Brückeneinheit 14a auf den Federschienen 12a, 12a'. Die beiden Seiten der Wischblattvorrichtung 10a mit den Endbereichen 26a, 26a' der Federschienen 12a, 12a', den Endkappen 28a, 28a' und den Brückeneinheiten 14a sind spiegelsymmetrisch ausgebildet. Daher ist in den Figuren jeweils lediglich eine Seite im Detail dargestellt. Alle Merkmale dieser Seite können aber auch auf die andere Seite übertragen werden. Im Folgenden ist deshalb lediglich die dargestellte Seite im Detail beschrieben. Die Endkappe 28a ist mit der Brückeneinheit 14a verrastet. Die Endkappe 28a weist dazu einen Rasthaken 66a und eine direkt dahinter angeordnete Rastaufnahme 68a auf. Der Rasthaken 66a und die Rastaufnahme 68a sind entlang der Haupterstreckungsrichtung 16a hintereinander angeordnet. Der Rasthaken 66a und die Rastaufnahme 68a sind an einer Innenseite der Endkappe 28a angeordnet. Der Rasthaken 66a ragt senkrecht zu der Haupterstreckungsrichtung 16a der Wischblattvorrichtung 10a und senkrecht zu der zweiten Öffnungsebene 44a der Endkappe 28a von dem Grundkörper 48a der Endkappe 28a in Richtung der Öffnung 46a. Die Rastaufnahme 68a weist eine Tiefe auf, die einer Tiefe des Grundkörpers 58a der Brückeneinheit 14a entspricht. Die Endkappe 28a ist über den Rasthaken 66a und die Rastaufnahme 68a mit der Brückeneinheit 14a verrastet. In einem montierten Zustand ist der Grundkörper 58a der Brückeneinheit 14a in der Rastaufnahme 68a aufgenommen. Auf einer, senkrecht zu der Haupterstreckungsrichtung 16a und senkrecht zu der zweiten Öffnungsebene 44a betrachtet, gegenüberliegenden Seite liegt die Brückeneinheit 14a in einem montierten Zustand an den zwei Haltestegen 50a, 52a der Endkappe 28a an. Die ersten Positionierungsmittel 62a, 62a' der Brückeneinheit 14a liegen an den Innenseiten der zwei Haltestege 50a, 52a der Endkappe 28a an. Die Federschienen 12a, 12a' sind zwischen den Innenseiten der Haltestege 50a, 52a und zwischen jeweils einer dem Grundkörper 58a der Brückeneinheit 14a abgewandten Fläche der Stege 60a, 60a' der Brückeneinheit 14a eingespannt. Dadurch kann unter anderem eine Rotation der Federschienen 12a, 12a' um eine Achse parallel zu der Haupterstreckungsrichtung 16a der Wischblattvorrichtung 10a verhindert werden. Die Federschienen 12a, 12a' und die Brückeneinheit 14a sind zwischen den Innenseiten der Haltestege 50a, 52a und zwischen einer Innenseite des Grundkörpers 48a der Endkappe 28a eingespannt. Eine jeweils dem Grundkörper 58a der Brückeneinheit 14a zugewandte Seite der Stege 60a, 60a' der Brückeneinheit 14a liegt jeweils an einem Fortsatz 70a, 72a der Innenseite des Grundkörpers 48a der Endkappe 28a an. Dadurch kann unter anderem eine vertikale Bewegung der Federschienen 12a, 12a' senkrecht zu der Haupterstreckungsrichtung 16a der Wischblattvorrichtung 10a und senkrecht zu der zweiten Öffnungsebene 44a der Endkappe 28a verhindert werden (Figur 5, 6, 7).

Bei einer Montage der Wischblattvorrichtung 10a werden in einem ersten Schritt die zwei Federschienen 12a, 12a' mit einer der Brückeneinheiten 14a verbunden. Die Brückeneinheit 14a wird dabei mit den Federschienen 12a, 12a' über die Rastmittel 22a, 22a' 24a, 24a' und die Ausnehmungen 20a, 20a' verrastet. Anschließend werden die zwei Federschienen 12a, 12a' mit der Windabweisereinheit 36a und dem Wischblattadapter 38a verbunden. In einem weiteren Schritt werden zwei Federschienen 12a, 12a' mit der zweiten, nicht weiter sichtbaren Brückeneinheiten verbunden. Die Brückeneinheit wird dabei mit den Federschienen 12a, 12a' über die Rastmittel und die Ausnehmungen verrastet. Anschließend wird die Wischleiste 34a parallel zu der Haupterstreckungsrichtung 16a der Wischblattvorrichtung 10a zwischen die Federschienen 12a, 12a' geschoben. In einem weiteren Schritt werden die Endkappen 28a, 28a' parallel zu der Haupterstreckungsrichtung 16a der Wischblattvorrichtung 10a auf die Enden der Federschienen 12a, 12a' und die Brückeneinheiten 14a geschoben. Die Brückeneinheiten 14a verrasten dabei mit den Endkappen 28a, 28a'. Grundsätzlich wäre jedoch auch eine andere, einem Fachmann als sinnvoll erscheinende Montagereihenfolge denkbar. Entscheidend ist bei einer Montage insbesondere, dass die Brückeneinheiten 14a vor einer Verbindung mit den Endkappen 28a, 28a' mit den Federschienen 12a, 12a' verbunden werden (Figur 4).

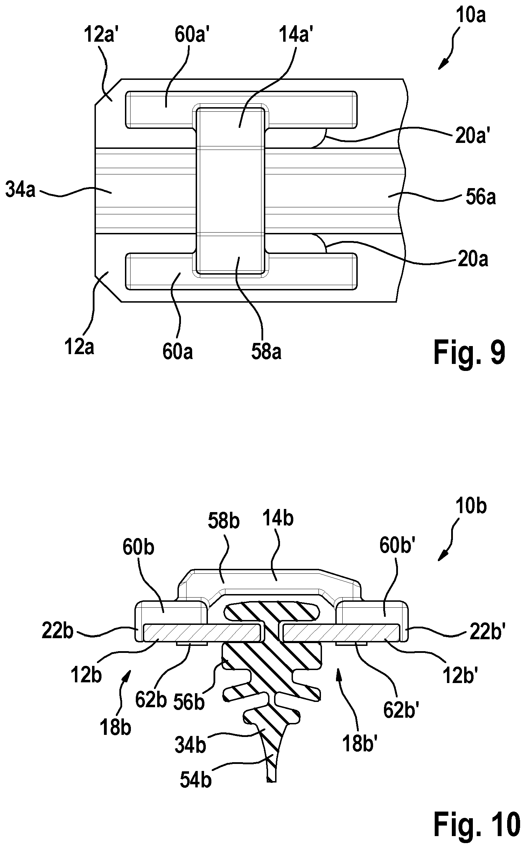

In den Figuren 10 bis 18 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 9, verwiesen werden kann. Zur Unterscheidung der Ausführungsbeispiele ist der Buchstabe a den Bezugszeichen des Ausführungsbeispiels in den Figuren 1 bis 9 nachgestellt. In den Ausführungsbeispielen der Figuren 10 bis 18 ist der Buchstabe a durch die Buchstaben b bis e ersetzt.

Figur 10 zeigt einen Teilausschnitt einer alternativen erfindungsgemäßen Wischblattvorrichtung 10b mit zwei Federschienen 12b, 12b', mit einer Brückeneinheit 14b und mit einer Wischleiste 34b, 34b'.

Die Wischblattvorrichtung 10b weist zwei Brückeneinheiten 14b auf. Die Brückeneinheiten 14b sind identisch ausgebildet. Daher ist in der Figur lediglich eine Brückeneinheit 14b dargestellt. Alle Merkmale dieser Brückeneinheit 14b können aber auch auf die andere nicht weiter sichtbare Brückeneinheit übertragen werden. Im Folgenden ist deshalb lediglich die dargestellte Brückeneinheit 14b im Detail beschrieben. Die Brückeneinheit 14b weist einen teilweise brückenförmigen Grundkörper 58b auf, der sich senkrecht zu einer Haupterstreckungsrichtung 16b von einer der Federschienen 12b, 12b' zu der anderen Federschiene 12b, 12b' erstreckt. An den zwei Enden des brückenförmigen Grundkörpers 58b ist jeweils ein Steg 60b 60b' angeordnet. Die zwei Stege 60b, 60b' erstrecken sich jeweils parallel zu der Haupterstreckungsrichtung 16b der Wischblattvorrichtung 10b. Ferner weist die Brückeneinheit 14b zwei Formschlusselemente 18b, 18b' auf. Die Formschlusselemente 18b, 18b' sind zu einer Herstellung einer direkten, in mehrere Richtungen wirkenden Formschlussverbindung mit den zwei Federschienen 12b, 12b' vorgesehen. Die Formschlusselemente 18b, 18b' sind zu einer Herstellung einer in einer Ebene wirkenden Formschlussverbindung vorgesehen. Die Formschlusselemente 18b, 18b' sind jeweils an einem der Stege 60b, 60b' der Brückeneinheit 14b angeordnet. Jedem Steg 60b, 60b' ist eines der Formschlusselemente 18b, 18b' zugeordnet. Die Formschlusselemente 18b, 18b' greifen jeweils teilweise in Ausnehmungen 20b, 20b' der Federschienen 12b, 12b' ein. In jede der Ausnehmungen 20b, 20b' greift jeweils teilweise ein Formschlusselement 18a, 18b' der Formschlusselemente 18b, 18b' ein. Zudem umgreifen die Formschlusselemente 18b, 18b' die Federschienen 12b, 12b' teilweise.

Die zwei Formschlusselemente 18b, 18b' der Brückeneinheit 14b weisen jeweils ein Rastmittel 22b, 22b' auf. Die Rastmittel 22b, 22b' der Formschlusselemente 18b, 18b' der Brückeneinheit 14b sind jeweils von einem Raststeg gebildet. Die Rastmittel 22b, 22b' der Formschlusselemente 18b, 18b' ragen senkrecht zu der Haupterstreckungsrichtung 16b der Wischblattvorrichtung 10b auf einer dem Grundkörper 48b einer Endkappe 28b abgewandten Seite aus den Stegen 60b, 60b' der Brückeneinheit 14b. Die Rastmittel 22b, 22b' der Formschlusselemente 18b, 18b' ragen jeweils, senkrecht zu der Haupterstreckungsrichtung 16b der Wischblattvorrichtung 10b betrachtet, an einer, bezogen auf die gesamte Brückeneinheit 14b, äußeren Kante der Stege 60b, 60b' aus den Stegen 60b, 60b'. Die Nasen der Rastmittel 22b, 22b' sind dabei, bezogen auf einen geometrischen Mittelpunkt der Brückeneinheit 14b, nach innen gerichtet. Die Rastmittel 22b, 22b' sind dazu vorgesehen, die Brückeneinheit 14b während einer Montage relativ zu den Federschienen 12b, 12b' zu halten. Die Rastmittel 22b, 22b' verrasten in einem montierten Zustand an einer Außenseite der Federschienen 12b, 12b'. Ferner weisen die Formschlusselemente 18b, 18b' jeweils ein Positionierungsmittel 62b, 62b' auf. Die Positionierungsmittel 62b, 62b' der Formschlusselemente 18b, 18b' sind jeweils von einem annähernd rechteckigen Fortsatz gebildet. Die Positionierungsmittel 62b, 62b' ragen in einem montierten Zustand jeweils in eine der Ausnehmungen 20b, 20b' der Federschienen 12b, 12b'. Das Positionierungsmittel 62b, 62b' jeweils eines Formschlusselements 18b, 18b' liegt dabei an drei Seiten der jeweiligen Ausnehmung 20b, 20b' der jeweiligen Federschienen 12b, 12b' an.

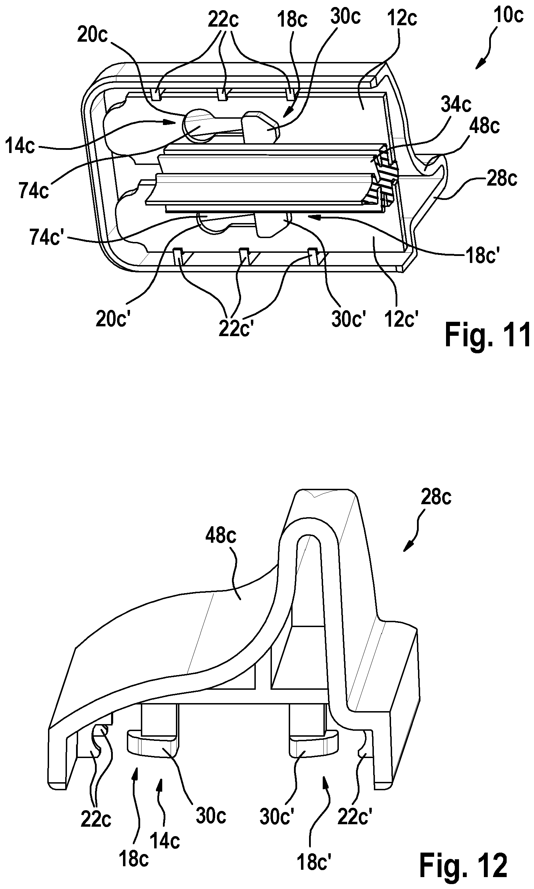

Figur 11 zeigt einen Teilausschnitt einer weiteren alternativen Wischblattvorrichtung 10c mit einer Wischleiste 34c, mit zwei Federschienen 12c, 12c', mit einer Brückeneinheit 14c und mit einer Endkappe 28c.

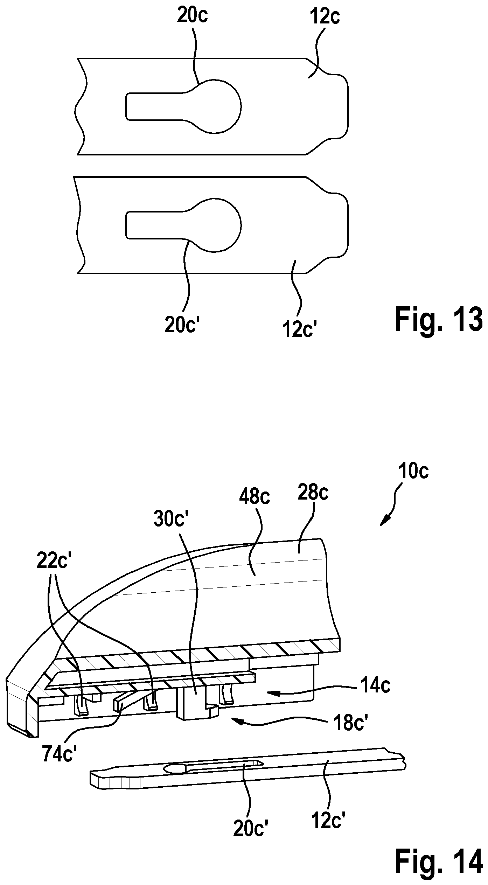

Die Federschienen 12c, 12c' weisen jeweils zwei Ausnehmungen 20c, 20c' auf. Die Ausnehmungen 20c, 20c' sind jeweils von Durchgangsöffnungen gebildet. Die Ausnehmungen 20c, 20c' sind jeweils von einer Schlüsselloch-Ausnehmung gebildet. Die Ausnehmungen 20c, 20c' sind jeweils von einem Langloch gebildet, das eine Haupterstreckungsrichtung parallel zu einer Haupterstreckungsrichtung 16c der Wischblattvorrichtung 10c aufweist. Die Langlöcher weisen jeweils bezogen auf die Federschienen 12c, 12c' an einem äußeren Ende einen vergrößertenm, annähernd kreisrunden Bereich auf. Die Ausnehmungen 20c, 20c' sind jeweils, entlang der Haupterstreckungsrichtung 16c betrachtet, in einem Endbereich 26c, 26c' der Federschienen 12c, 12c' angeordnet. Die zwei Ausnehmungen 20c, 20c' einer Federschiene 12c, 12c' sind dabei jeweils in gegenüberliegenden Endbereichen 26c, 26c' angeordnet (Figur 13).

Die Wischblattvorrichtung 10c weist zwei Endkappen 28c, 28c' auf. Ferner weist die Wischblattvorrichtung 10c zwei Brückeneinheiten 10c auf. Die Endkappen 28c, 28c' sind einstückig mit den Brückeneinheiten 14c ausgebildet. Jede der Endkappen 28c, 28c' ist jeweils einstückig mit einer der Brückeneinheiten 14c ausgebildet. Die Endkappen 28c, 28c' und die Brückeneinheiten 14c sind jeweils spiegelsymmetrisch ausgebildet. Daher ist in den Figuren jeweils lediglich eine Endkappe 28c und eine Brückeneinheit 14c dargestellt. Alle Merkmale dieser Endkappe 28c und dieser Brückeneinheit 14c können jedoch auch auf die andere Endkappe 28c' und die andere Brückeneinheit übertragen werden. Im Folgenden sind deshalb lediglich die dargestellte Endkappe 28c und die dargestellte Brückeneinheit 14c im Detail beschrieben. Die Endkappe 14c ist einstückig mit der Brückeneinheit 28c ausgebildet. Die Brückeneinheit 14c ist an einer Innenseite der Endkappe 28c angeordnet. Die Brückeneinheit 14c ragt senkrecht zu der Haupterstreckungsrichtung 16c der Wischblattvorrichtung 10c aus dem Grundkörper 48c der Endkappe 28c in Richtung einer Öffnung 46c der Endkappe 28c (Figur 12).

Die Brückeneinheit 14c weist zwei Formschlusselemente 18c, 18c' auf. Die Formschlusselemente 18c, 18c' sind zu einer Herstellung einer direkten, in mehrere Richtungen wirkenden Formschlussverbindung mit den zwei Federschienen 12c, 12c' vorgesehen. Die Formschlusselemente 18c, 18c' sind zu einer Herstellung einer in einer Ebene wirkenden Formschlussverbindung vorgesehen. Die Formschlusselemente 18c, 18c' greifen jeweils teilweise in die Ausnehmungen 20c, 20c' der Federschienen 12c, 12c' ein. In jede der Ausnehmungen 20c, 20c' greift jeweils teilweise ein Formschlusselement 18c, 18c' der Formschlusselemente 18c, 18c' ein. Die Formschlusselemente 18c, 18c' der Brückeneinheit 14c greifen teilweise in eine Ausnehmung 20c, 20c' der einen Federschiene 12c, 12c' und teilweise in eine Ausnehmung 20c, 20c' der anderen Federschiene 12c, 12c' ein. Die Formschlusselemente 18c, 18c' der Brückeneinheit 14c greifen in Ausnehmungen 20c, 20c' ein, die in einem Endbereich 26c angeordnet sind. Zudem umgreifen die Formschlusselemente 18c, 18c' die Federschienen 12c, 12c' teilweise (Figur 11, 12).

Die zwei Formschlusselemente 18c, 18c' der Brückeneinheit 14c weisen jeweils drei Rastmittel 22c, 22c' auf. Die Rastmittel 22c, 22c' der Formschlusselemente 18c, 18c' der Brückeneinheit 14c sind jeweils von einer Rastnase gebildet. Die Rastmittel 22c, 22c' der Formschlusselemente 18c, 18c' ragen jeweils senkrecht zu der Haupterstreckungsrichtung 16c der Wischblattvorrichtung 10c und parallel zu einer zweiten Öffnungsebene 44c der Endkappe 28c in die Öffnung 46c der Endkappe 28c. Die Rastmittel 22c, 22c' eines Formschlusselements 18c, 18c' sind dabei den Rastmitteln 22c, 22c' des anderen Formschlusselements 18c, 18c' entgegengerichtet. Die Nasen der Rastmittel 22c, 22c' sind dabei, bezogen auf einen geometrischen Mittelpunkt der Endkappe 28c, nach innen gerichtet. Die Rastmittel 22c, 22c' sind dazu vorgesehen, die Brückeneinheit 14c und die Endkappe 28c relativ zu den Federschienen 12c, 12c' zu halten. Die Rastmittel 22c, 22c' verrasten in einem montierten Zustand an einer Außenseite der Federschienen 12c, 12c'. Dadurch kann eine exakte Positionierung erfolgen. Ferner weisen die zwei Formschlusselemente 18c, 18c' jeweils ein Verriegelungselement 30c, 30c' auf. Die Verriegelungselemente 30c, 30c' der Formschlusselemente 18c, 18c' sind dazu vorgesehen, in jeweils einer der Ausnehmungen 20c, 20c' der zwei Federschienen 12c, 12c' verriegelt zu werden. Die Verriegelungselemente 30c, 30c' sind jeweils von einem Fortsatz gebildet, der an seinem freien Ende eine vergrößerte Platte aufweist. Die vergrößerten Platten der Verriegelungselemente 30c, 30c' sind dabei so dimensioniert, dass sie durch den vergrößerten Bereich der Ausnehmungen 20c, 20c' der Federschienen 12c, 12c' passen, nicht aber durch den restlichen Bereich der Ausnehmungen 20c, 20c'. Die Verriegelungselemente 30c, 30c' können demnach durch ein Einführen und ein anschließendes Verschieben in den Ausnehmungen 20c, 20c' der Federschienen 12c, 12c' verriegelt und gesichert werden. Des Weiteren weisen die Formschlusselemente 20c, 20c' jeweils ein Sicherungsmittel 74c, 74c' auf. Die Sicherungsmittel 74c, 74c' der Formschlusselemente 18c, 18c' sind jeweils von einer elastischen Lasche gebildet. Die Sicherungsmittel 74c, 74c' sind jeweils entlang der Haupterstreckungsrichtung 16c der Wischblattvorrichtung 10c hinter den Verriegelungselementen 30c, 30c' angeordnet. Ein Ende der Sicherungsmittel 74c, 74c' kann jeweils senkrecht zu der zweiten Öffnungsebene 44c der Endkappe 28c gegenüber dem Grundkörper 48c der Endkappe 28c elastisch ausgelenkt werden. Die Sicherungsmittel 74, 74c' sind dazu vorgesehen in einem montierten Zustand in den Ausnehmungen 20c, 20c' der Federschienen 12c, 12c' zu verrasten. Die Sicherungsmittel 74c, 74c' sind dazu vorgesehen in einem montierten Zustand in dem vergrößerten Bereich der Ausnehmungen 20c, 20c' der Federschienen 12c, 12c' mit den Federschienen 12c, 12c' zu verrasten. Das Sicherungsmittel 74c, 74c' der Formschlusselemente 18c, 18c' sichert jeweils das Verriegelungselement 30c, 30c' gegen ein Zurückrutschen. Dadurch kann eine exakte Positionierung erfolgen. Ferner kann dadurch unter anderem eine horizontale Bewegung der Federschienen 12c, 12c' entlang der Haupterstreckungsrichtung 16c der Wischblattvorrichtung 10c verhindert werden (Figur 11, 12, 14).

Bei einer Montage der Wischblattvorrichtung 10c werden in einem ersten Schritt die zwei Federschienen 12c, 12c' mit der Windabweisereinheit 36c und dem Wischblattadapter 38c verbunden. In einem weiteren Schritt werden die Federschienen 12c, 12c' nun mit einem der Endkappen 28c und der damit einteilig ausgebildeten Brückeneinheit 14c verbunden. Dabei werden die Verriegelungselemente 30c, 30c' der Formschlusselemente 18c, 18c' der Brückeneinheit 14c senkrecht zu der Haupterstreckungsrichtung 16c der Wischblattvorrichtung 18c und senkrecht zu der zweiten Öffnungsebene 44c der Endkappe 28c teilweise in die Ausnehmungen 20c, 20c' eingeführt. Anschließend werden die Federschienen 12c, 12c' mit Druck in die Rastmittel 22c, 22c' der Formschlusselemente 18c, 18c' der Brückeneinheit 14c gepresst, sodass die Verriegelungselemente 30c, 30c' vollständig in die Ausnehmungen 20c, 20c' eingreifen. Nun wird die Endkappe 28c mit der Brückeneinheit 14c parallel zu der Haupterstreckungsrichtung 16c der Wischvorrichtung 10c weiter auf die Federschienen 12c, 12c' aufgeschoben, bis die Verriegelungselemente 30c, 30c' an den Enden der jeweiligen Ausnehmungen 20c, 20c' angelangt sind und die Sicherungsmittel 74c, 74c' in die Ausnehmungen 20c, 20c' einrasten. Anschließend wird die Wischleiste 34c parallel zu der Haupterstreckungsrichtung 16c der Wischblattvorrichtung 10c zwischen die Federschienen 12c, 12c' geschoben. In einem weiteren Schritt werden die Federschienen 12c, 12c' nun mit der anderen der Endkappen 28c' und der damit einteilig ausgebildeten Brückeneinheit verbunden. Dabei wird die Endkappe 28c' identisch mit der anderen Endkappe 28c mit den Federschienen 12c, 12c' verbunden (Figur 11, 14).

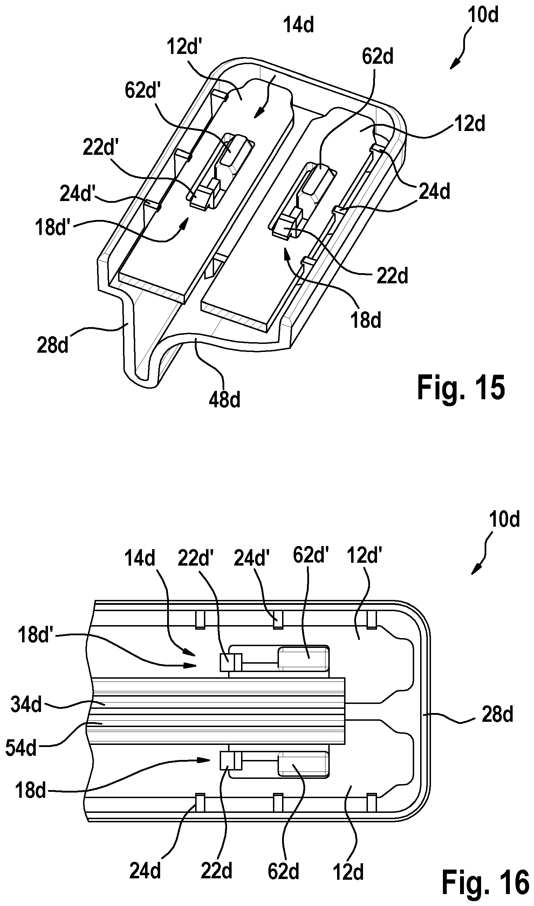

Figur 15 zeigt einen Teilausschnitt einer weiteren alternativen Wischblattvorrichtung 10d mit zwei Federschienen 12d, 12d', mit einer Brückeneinheit 14d und mit einer Endkappe 28d.

Die Wischblattvorrichtung 10d weist zwei Endkappen 28d, 28d' auf. Ferner weist die Wischblattvorrichtung zwei Brückeneinheiten 14d auf. Die Endkappen 28d, 28d' sind einstückig mit den Brückeneinheiten 14d ausgebildet. Jede der Endkappen 28d, 28d' ist jeweils einstückig mit einer der Brückeneinheiten 14d ausgebildet. Die Endkappen 28d, 28d' und die Brückeneinheiten 14d sind jeweils identisch ausgebildet. Daher ist in den Figuren jeweils lediglich eine Endkappe 28d und eine Brückeneinheit 14d dargestellt. Alle Merkmale dieser Endkappe 28d und dieser Brückeneinheit 14d können jedoch auch auf die andere Endkappe 28d' und die andere Brückeneinheit übertragen werden. Im folgenden ist deshalb lediglich die dargestellte Endkappe 28d und die dargestellte Brückeneinheit 14d im Detail beschrieben. Die Endkappe 28d ist einstückig mit der Brückeneinheit 14d ausgbildet. Die Brückeneinheit 14d ist an einer Innenseite der Endkappe 28d angeordnet. Der Brückeneinheit 14d ragt senkrecht zu der Haupterstreckungsrichtung 16d der Wischblattvorrichtung 10d aus dem Grundkörper 48d der Endkappe 28d in Richtung einer Öffnung 46d der Endkappe 28d.

Die Brückeneinheit 14d weist zwei Formschlusselemente 18d, 18d' auf. Die Formschlusselemente 18d, 18d' sind zu einer Herstellung einer direkten, in mehrere Richtungen wirkenden Formschlussverbindung mit den zwei Federschienen 12d, 12d' vorgesehen. Die Formschlusselemente 18d, 18d' greifen jeweils teilweise in Ausnehmungen 20d, 20d' der Federschienen 12d, 12d' ein. Zudem umgreifen die Formschlusselemente 18d, 18d' die Federschienen 12d, 12d' teilweise.

Die zwei Formschlusselemente 18d, 18d' der Brückeneinheit 14d weisen jeweils ein erstes Rastmittel 22d, 22d' auf. Die ersten Rastmittel 22d, 22d' der Formschlusselemente 18d, 18d' sind jeweils von einem Rasthaken gebildet. Die ersten Rastmittel 22d, 22d' der Formschlusselemente 18d, 18d' ragen senkrecht zu der Haupterstreckungsrichtung 16d der Wischblattvorrichtung 10d und senkrecht zu einer zweiten Öffnungsebene 44d der Endkappe 28d an einer Innenseite der Endkappe 28d aus dem Grundkörper 48d der Endkappe 28d. Die Nasen der ersten Rastmittel 22d, 22d' sind, parallel zu der Haupterstreckungsrichtung 16d der Wischblattvorrichtung 10d betrachtet, in Richtung der Öffnung 46d der Endkappe 28d gerichtet. Die Rastmittel 22d, 22d' verrasten in einem montierten Zustand in den Ausnehmungen 20d, 20d' der Federschienen 12d, 12d'. Die Rastmittel 22d, 22d' verrasten dabei in einem montierten Zustand mit Wandungen der Federschienen 12d, 12d', welche die Ausnehmungen 20d, 20d' begrenzen. Ferner weisen die zwei Formschlusselemente 18d, 18d' der Brückeneinheit 14d jeweils drei zweite Rastmittel 24d, 24d' auf. Die zweiten Rastmittel 24d, 24d' der Formschlusselemente 18d, 18d' der Brückeneinheit 14d sind jeweils von einer Rastnase gebildet. Die zweiten Rastmittel 24d, 24d' der Formschlusselemente 18d, 18d' ragen jeweils senkrecht zu der Haupterstreckungsrichtung 16d der Wischblattvorrichtung 10d und parallel zu der zweiten Öffnungsebene 44d der Endkappe 28d in die Öffnung 46d der Endkappe 28d. Die Nasen der zweiten Rastmittel 24d, 24d' sind dabei bezogen auf einen geometrischen Mittelpunkt der Endkappe 28d nach innen gerichtet. Die zweiten Rastmittel 24d, 24d' sind dazu vorgesehen, die Brückeneinheit 14d und die Endkappe 28d relativ zu den Federschienen 12d, 12d' zu halten. Die zweiten Rastmittel 24d, 24d' verrasten in einem montierten Zustand an einer Außenseite der Federschienen 12d, 12d'. Ferner weisen die Formschlusselemente jeweils ein Positionierungsmittel 62d, 62d' auf. Die Positionierungsmittel 62d, 62d' der Formschlusselemente 18d, 18d' sind jeweils von einem annähernd rechteckigen Fortsatz gebildet. Die Positionierungsmittel 62d, 62d' sind, entlang der Haupterstreckungsrichtung 16d der Wischblattvorrichtung 10d betrachtet, hinter den ersten Rastmitteln 22d, 22d' angeordnet. Das Positionierungsmittel 62d, 62d' und das erste Rastmittel 22d, 22d' jeweils eines Formschlusselements 18d, 18d' liegen an drei Seiten der jeweiligen Ausnehmung 20d, 20d' der jeweiligen Federschienen 12d, 12d' an. Dadurch kann eine exakte Positionierung erfolgen (Figur 16).

Bei einer Montage der Wischblattvorrichtung 10d werden in einem ersten Schritt die zwei Federschienen 12d, 12d' mit der Windabweisereinheit 36d und dem Wischblattadapter 38d verbunden. In einem weiteren Schritt werden die Federschienen 12d, 12d' nun mit einem der Endkappen 28d und der damit einteilig ausgebildeten Brückeneinheit 14d verbunden. Dabei wird die Endkappe 28d senkrecht zu der zweiten Öffnungsebene 44d der Endkappe 28d auf die Enden der Federschienen 12d, 12d' aufgedrückt, sodass die ersten Rastmittel 22d, 22d' und die zweiten Rastmittel 24d, 24d' der Formschlusselemente 18d, 18d' mit den Federschienen 12d, 12d' verrasten. Anschließend wird die Wischleiste 34d parallel zu der Haupterstreckungsrichtung 16d der Wischblattvorrichtung 10d zwischen die Federschienen 12d, 12d' geschoben. In einem weiteren Schritt werden die Federschienen 12d, 12d' nun mit der anderen der Endkappen 28d' und der damit einteilig ausgebildeten Brückeneinheit verbunden. Dabei wird die Endkappe 28d' identisch mit der anderen Endkappe 28d mit den Federschienen 12d, 12d' verbunden.

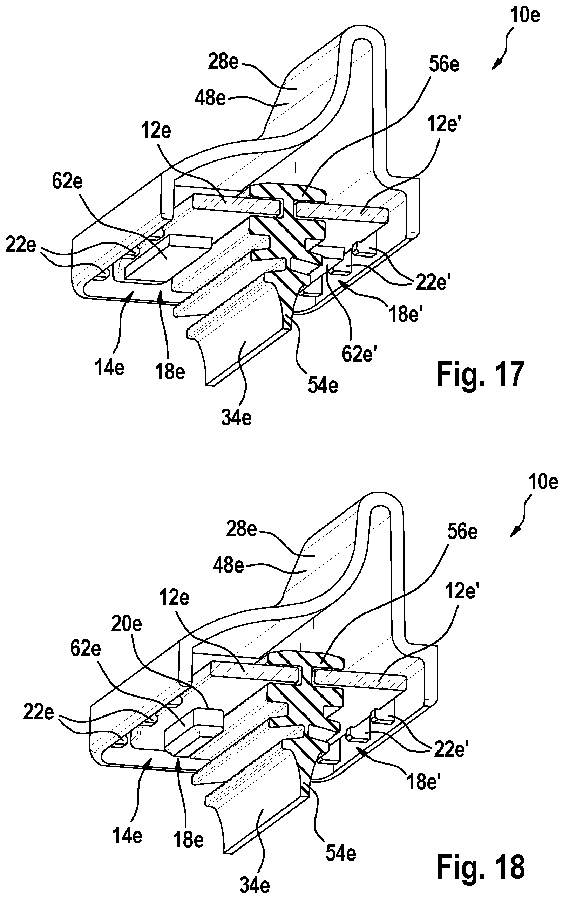

Figur 17 zeigt einen Teilausschnitt einer weiteren alternativen Wischblattvorrichtung 10e mit einer Wischleiste 34e, mit zwei Federschienen 12e, 12e', mit einer Brückeneinheit 14e und mit einer Endkappe 28e.

Die Wischblattvorrichtung 10e weist zwei Endkappen 28e, 28e' auf. Ferner weist die Wischblattvorrichtung 10e zwei Brückeneinheiten 14e auf. Die Endkappen 28e, 28e' sind einstückig mit den Brückeneinheiten 14e ausgebildet. Jede der Endkappen 28e, 28e' ist jeweils einstückig mit einer der Brückeneinheiten 14e ausgebildet. Die Endkappen 28e, 28e' und die Brückeneinheiten 14e sind jeweils identisch ausgebildet. Daher ist in den Figuren jeweils lediglich eine Endkappe 28e und eine Brückeneinheit 14e dargestellt. Alle Merkmale dieser Endkappe 28e und dieser Brückeneinheit 14e können jedoch auch auf die andere Endkappe 28e' und die andere Brückeneinheit übertragen werden. Im Folgenden ist deshalb lediglich die dargestellte Endkappe 28e und die dargestellte Brückeneinheit 14e im Detail beschrieben. Die Endkappe 28e ist einstückig mit der Brückeneinheit 14e ausgebildet. Die Brückeneinheit 14e ist an einer Innenseite der Endkappe 28e angeordnet. Der Brückeneinheit 14e ragt senkrecht zu der Haupterstreckungsrichtung 16e der Wischblattvorrichtung 10e aus dem Grundkörper 48e der Endkappe 28e in Richtung einer Öffnung 46e.

Die Brückeneinheit 14e weist zwei Formschlusselemente 18e, 18e' auf. Die Formschlusselemente 18e, 18e' sind zu einer Herstellung einer direkten, in mehrere Richtungen wirkenden Formschlussverbindung mit den zwei Federschienen 12e, 12e' vorgesehen. Die Formschlusselemente 18e, 18e' greifen jeweils teilweise in Ausnehmungen 20e, 20e' der Federschienen 12e, 12e' ein. Zudem umgreifen die Formschlusselemente 18e, 18e' die Federschienen 12e, 12e' teilweise.

Die zwei Formschlusselemente 18e, 18e' der Brückeneinheit 14e weisen jeweils drei Rastmittel 22e, 22e' auf. Die Rastmittel 22e, 22e' der Formschlusselemente 18e, 18e' der Brückeneinheit 14e sind jeweils von einer Rastnase gebildet. Die Rastmittel 22e, 22e' der Formschlusselemente 18e, 18e' ragen jeweils senkrecht zu der Haupterstreckungsrichtung 16e der Wischblattvorrichtung 10e, und parallel zu der zweiten Öffnungsebene 44e der Endkappe 28e in die Öffnung 46e der Endkappe 28e. Die Rastmittel 22e, 22e' verrasten in einem montierten Zustand an einer Außenseite der Federschienen 12e, 12e'. Ferner weisen die Formschlusselemente 18e, 18e' jeweils ein Positionierungsmittel 62e, 26e' auf. Die Positionierungsmittel 62e, 26e' der Formschlusselemente 18e, 18e' sind jeweils von einem annähernd rechteckigen, heißverstemmten Fortsatz gebildet. Die Positionierungsmittel 62e, 26e' der Formschlusselemente 18e, 18e' ragen senkrecht zu der Haupterstreckungsrichtung 16e der Wischblattvorrichtung 10e und senkrecht zu einer zweiten Öffnungsebene 44e der Endkappe 28e an einer Innenseite der Endkappe 28e aus dem Grundkörper 48e der Endkappe 28e. Ein freies Ende der Positionierungsmittel 62e, 26e' ist in einem montierten Zustand jeweils derart heißverstemmt, dass es einen Querschnitt aufweist, der größer ist als ein Querschnitt der jeweiligen Ausnehmung 20e, 20e' der Federschienen 12e, 12e'. Die Positionierungsmittel 62e, 26e' sind dadurch fest und unverlierbar in den Ausnehmungen 20e, 20e' gehalten.

Bei einer Montage der Wischblattvorrichtung 10e werden in einem ersten Schritt die zwei Federschienen 12e, 12e' mit der Windabweisereinheit 36e und dem Wischblattadapter 38e verbunden. In einem weiteren Schritt werden die Federschienen 12e, 12e' nun mit einem der Endkappen 28e und der damit einteilig ausgebildeten Brückeneinheit 14e verbunden. Dabei wird die Endkappe 28e senkrecht zu der zweiten Öffnungsebene 44e der Endkappe 28e auf die Enden der Federschienen 12e, 12e' aufgedrückt, sodass die Rastmittel 22e, 22e' der Formschlusselemente 18e, 18e' mit den Federschienen 12e, 12e' verrasten. Anschließend werden die freien Enden der Positionierungsmittel 62e, 26e' der Formschlusselemente 18e, 18e' hinter den Ausnehmungen 20e, 20e' heißverstemmt. Anschließend wird die Wischleiste 34e parallel zu der Haupterstreckungsrichtung 16e der Wischblattvorrichtung 10e zwischen die Federschienen 12e geschoben. In einem weiteren Schritt werden die Federschienen 12e nun mit der anderen der Endkappen 28e' und der damit einteilig ausgebildeten Brückeneinheit verbunden. Dabei wird die Endkappe 28e' identisch mit der anderen Endkappe 28e mit den Federschienen 12e, 12e' verbunden.

## Patentansprüche

1. Wischblattvorrichtung mit zumindest zwei Federschienen (12a, 12a'; 12b, 12b'; 12c, 12c'; 12d, 12d'; 12e, 12e') und mit zumindest einer Brückeneinheit (14a; 14b; 14c; 14d; 14e), die zumindest dazu vorgesehen ist, die zumindest zwei Federschienen (12a, 12a'; 12b, 12b'; 12c, 12c'; 12d, 12d'; 12e, 12e') in wenigstens einem Bereich entlang einer Haupterstreckungsrichtung (16a; 16b; 16c; 16d; 16e) in einem definierten Abstand relativ zueinander zu halten,
wobei die zumindest eine Brückeneinheit (14a; 14b; 14c; 14d; 14e) zumindest zwei Formschlusselemente (18a, 18a'; 18b, 18b'; 18c, 18c'; 18d, 18d'; 18e, 18e') aufweist, die zu einer Herstellung einer direkten, in zumindest eine Richtung wirkenden Formschlussverbindung mit den zumindest zwei Federschienen (12a, 12a'; 12b, 12b'; 12c, 12c'; 12d, 12d'; 12e, 12e') vorgesehen sind und
wobei zumindest eine Endkappe (28a, 28a'; 28b, 28b'; 28c, 28c'; 28d, 28d'; 28e, 28e'), die in zumindest einem Endbereich (26a, 26a'; 26b, 26b'; 26c, 26c'; 26d, 26d'; 26e, 26e') der zumindest zwei Federschienen (12a, 12a'; 12b, 12b'; 12c, 12c'; 12d, 12d'; 12e, 12e') angeordnet ist, **dadurch gekennzeichnet,**
**dass** die zumindest eine Endkappe (28a, 28a'; 28b, 28b') die zumindest eine Brückeneinheit (14a; 14b) auf den zumindest zwei Federschienen (12a, 12a'; 12b, 12b') sichert.

2. Wischblattvorrichtung nach Anspruch 1, **dadurch gekennzeichnet, dass** die zumindest zwei Federschienen (12a, 12a'; 12b, 12b'; 12c, 12c'; 12d, 12d'; 12e, 12e') jeweils zumindest eine Ausnehmung (20a, 20a';20b, 20b'; 20c, 20c';20d, 20d'; 20e, 20e') aufweisen, in die jeweils zumindest eines der zumindest zwei Formschlusselemente (18a, 18a'; 18b, 18b'; 18c, 18c'; 18d, 18d'; 18e, 18e') der zumindest einen Brückeneinheit (14a; 14b; 14c; 14d; 14e) eingreift.

3. Wischblattvorrichtung nach Anspruch 1 oder 2, **dadurch gekennzeichnet, dass** die zumindest zwei Formschlusselemente (18a, 18a'; 18b, 18b'; 18c, 18c'; 18d, 18d'; 18e, 18e') jeweils zumindest ein Rastmittel (22a, 22a', 24a, 24a'; 22b, 22b'; 22c, 22c'; 22d, 22d', 24d, 24d') aufweisen.

4. Wischblattvorrichtung nach einem der vorhergehenden Ansprüche, **dadurch gekennzeichnet, dass** der zumindest eine Bereich entlang der Haupterstreckungsrichtung (16a; 16b; 16c; 16d; 16e) der zumindest zwei Federschienen (12a, 12a'; 12b, 12b'; 12c, 12c'; 12d, 12d'; 12e, 12e') in einem Endbereich (26a, 26a'; 26b, 26b'; 26c, 26c'; 26d, 26d'; 26e, 26e') der zumindest zwei Federschienen (12a, 12a'; 12b, 12b'; 12c, 12c'; 12d, 12d'; 12e, 12e') angeordnet ist.

5. Wischblattvorrichtung nach einem der vorhergehenden Ansprüche, **dadurch gekennzeichnet, dass** die zumindest zwei Formschlusselemente (18e, 18e') zur Herstellung einer Formschlussverbindung verstemmt sind.

6. Wischblatt mit zumindest einer Wischblattvorrichtung (10a; 10b; 10c; 10d; 10e) nach einem der Ansprüche 1 bis 5.

## Claims

1. Wiper blade device having at least two spring rails (12a, 12a'; 12b, 12b'; 12c, 12c'; 12d, 12d'; 12e, 12e') and having at least one bridge unit (14a; 14b; 14c; 14d; 14e) which is at least intended to keep the at least two spring rails (12a, 12a'; 12b, 12b'; 12c, 12c'; 12d, 12d'; 12e, 12e') in at least one region along a main direction of extent (16a; 16b; 16c; 16d; 16e) at a defined spacing relative to one another,
wherein the at least one bridge unit (14a; 14b; 14c; 14d; 14e) has at least two form-fitting elements (18a, 18a'; 18b, 18b'; 18c, 18c'; 18d, 18d'; 18e, 18e') which are intended for producing a direct form-fiting connection, which acts in at least one direction, with the at least two spring rails (12a, 12a'; 12b, 12b'; 12c, 12c'; 12d, 12d'; 12e, 12e'), and
wherein at least one end cap (28a, 28a'; 28b, 28b'; 28c, 28c'; 28d, 28d'; 28e, 28e'), which is arranged in at least one end region (26a, 26a'; 26b, 26b'; 26c, 26c'; 26d, 26d'; 26e, 26e') of the at least two spring rails (12a, 12a'; 12b, 12b'; 12c, 12c'; 12d, 12d'; 12e, 12e'), **characterized in that** the at least one end cap (28a, 28a'; 28b, 28b') secures the at least one bridge unit (14a; 14b) on the at least two spring rails (12a, 12a'; 12b, 12b').

2. Wiper blade device according to Claim 1, **characterized in that** the at least two spring rails 12a, 12a'; 12b, 12b'; 12c, 12c'; 12d, 12d'; 12e, 12e') each have at least one cutout (20a, 20a'; 20b, 20b'; 20c, 20c'; 20d, 20d'; 20e, 20e') in each of which at least one of the at least two form-fitting elements (18a, 18a'; 18b, 18b'; 18c, 18c'; 18d, 18d'; 18e, 18e') of the at least one bridge unit (14a; 14b; 14c; 14d; 14e) engages.

3. Wiper blade device according to Claim 1 or 2, **characterized in that** the at least two form-fitting elements (18a, 18a'; 18b, 18b'; 18c, 18c'; 18d, 18d'; 18e, 18e') each have at least one latching means (22a, 22a'; 24a, 24a'; 22b, 22b'; 22c, 22c'; 22d, 22d'; 24d, 24d').

4. Wiper blade device according to one of the preceding claims, **characterized in that** the at least one region is arranged along the main direction of extent (16a; 16b; 16c; 16d; 16e) of the at least two spring rails (12a, 12a'; 12b, 12b'; 12c, 12c'; 12d, 12d'; 12e, 12e') in an end region (26a, 26a'; 26b, 26b'; 26c, 26c'; 26d, 26d'; 26e, 26e') of the at least two spring rails (12a, 12a'; 12b, 12b'; 12c, 12c'; 12d, 12d'; 12e, 12e').

5. Wiper blade device according to one of the preceding claims, **characterized in that** the at least two form-fitting elements (18e, 18e') are caulked to produce a form-fitting connection.

6. Wiper blade having at least one wiper blade device (10a; 10b; 10c; 10d; 10e) according to one of Claims 1 to 5.

## Revendications

1. Dispositif de balai d'essuie-glace comprenant au moins deux rails élastiques (12a, 12a' ; 12b, 12b' ; 12c, 12c' ; 12d, 12d' ; 12e, 12e') et au moins une unité formant pont (14a ; 14b ; 14c ; 14d ; 14e) qui est au moins prévue pour maintenir à une distance définie l'un par rapport à l'autre les au moins deux rails élastiques (12a, 12a' ; 12b, 12b' ; 12c, 12c' ; 12d, 12d' ; 12e, 12e') dans au moins une région le long d'une direction d'étendue principale (16a ; 16b ; 16c ; 16d ; 16e), l'au moins une unité formant pont (14a ; 14b ; 14c ; 14d ; 14e) présentant au moins deux éléments d'engagement par correspondance de formes (18a, 18a' ; 18b, 18b' ; 18c, 18c' ; 18d, 18d' ; 18e, 18e') qui sont prévus pour établir une liaison directe par engagement par correspondance de formes agissant dans au moins une direction avec les au moins deux rails élastiques (12a, 12a' ; 12b, 12b' ; 12c, 12c' ; 12d, 12d' ; 12e, 12e') et dans lequel au moins un embout (28a, 28a' ; 28b, 28b'; 28c, 28c' ; 28d, 28d' ; 28e, 28e') qui est disposé dans au moins une région d'extrémité (26a, 26a' ; 26b, 26b' ; 26c, 26c' ; 26d, 26d' ; 26e, 26e') des au moins deux rails élastiques (12a, 12a' ; 12b, 12b' ; 12c, 12c' ; 12d, 12d' ; 12e, 12e'),
**caractérisé en ce que**
l'au moins un embout (28a, 28a' ; 28b, 28b') fixe l'au moins une unité formant pont (14a ; 14b) sur les au moins deux rails élastiques (12a, 12a' ; 12b, 12b').

2. Dispositif de balai d'essuie-glace selon la revendication 1, **caractérisé en ce que** les au moins deux rails élastiques (12a, 12a' ; 12b, 12b' ; 12c, 12c' ; 12d, 12d' ; 12e, 12e') présentent à chaque fois au moins un évidement (20a, 20a' ; 20b, 20b' ; 20c, 20c' ; 20d, 20d' ; 20e, 20e') dans lequel s'engage à chaque fois au moins l'un des au moins deux éléments d'engagement par correspondance de formes (18a, 18a' ; 18b, 18b' ; 18c, 18c' ; 18d, 18d' ; 18e, 18e') de l'au moins une unité formant pont (14a ; 14b ; 14c ; 14d ; 14e) .

3. Dispositif de balai d'essuie-glace selon la revendication 1 ou 2, **caractérisé en ce que** les au moins deux éléments d'engagement par correspondance de formes (18a, 18a' ; 18b, 18b' ; 18c, 18c' ; 18d, 18d' ; 18e, 18e') présentent à chaque fois au moins un moyen d'encliquetage (22a, 22a', 24a, 24a' ; 22b, 22b' ; 22c, 22c' ; 22d, 22d', 24d, 24d').

4. Dispositif de balai d'essuie-glace selon l'une quelconque des revendications précédentes, **caractérisé en ce que** l'au moins une région le long de la direction d'étendue principale (16a ; 16b ; 16c ; 16d ; 16e) des au moins deux rails élastiques (12a, 12a' ; 12b, 12b' ; 12c, 12c' ; 12d, 12d' ; 12e, 12e') est disposée dans une région d'extrémité (26a, 26a' ; 26b, 26b' ; 26c, 26c' ; 26d, 26d' ; 26e, 26e') des au moins deux rails élastiques (12a, 12a' ; 12b, 12b' ; 12c, 12c' ; 12d, 12d' ; 12e, 12e').

5. Dispositif de balai d'essuie-glace selon l'une quelconque des revendications précédentes, **caractérisé en ce que** les au moins deux éléments d'engagement par correspondance de formes (18e, 18e') sont matés pour établir une liaison par engagement par correspondance de formes.

6. Balai d'essuie-glace comprenant au moins un dispositif de balai d'essuie-glace (10a ; 10b ; 10c ; 10d ; 10e) selon l'une quelconque des revendications 1 à 5.
